# EUROPEAN PATENT SPECIFICATION

(11) **EP 1 926 160 B1**
(45) Date of publication and mention of the grant of the patent: **11.06.2014**
(21) Application number: 07254508.0
(22) Date of filing: 20.11.2007
(51) Int. Cl.: H01M 2/04, H01M 10/42, H01M 2/22, H01M 10/058

(54) **Battery pack and fabricating method thereof**
Batteriepack und dessen Herstellungsverfahren
Bloc de batterie et procédé de fabrication d'un tel bloc

(30) Priority: 20.11.2006 KR 20060114423
(43) Date of publication of application: 28.05.2008
(73) Proprietor: Samsung SDI Co., Ltd., Suwon-si, Gyeonggi-do (KR)
(72) Inventor: Yoon, Heuisang, Yongin-si Gyeonggi-do (KR)
(74) Representative: Mounteney, Simon James

(56) References cited:
- WO-A-2006/046343
- JP-A- 2003 308 881
- JP-A- 2006 004 783
- US-A- 5 999 410
- US-A1- 2004 251 872
- US-A1- 2006 083 982
- US-A1- 2006 099 492

## Description

### BACKGROUND OF THE INVENTION

### Field of the Invention

The present invention relates to a battery pack. More specifically, the present invention relates to a battery pack and a fabricating method thereof which can increase a coupling strength between a bare cell and a circuit accessory thus prevent the circuit accessory from being separated from the bare cell due to an external force resulting from bending, twisting and falling of the battery.

### Description of the Related Art

Generally, a secondary battery is a battery capable of charging and discharging, differing from a primary battery which is not capable of charging. Secondary batteries have been manufactured in the shape of a battery pack and broadly used as power supplies of portable electronic devices such as cellular phones, notebook computers, Personal Digital Assistants (PDAs) and camcorders.

As secondary batteries, lithium secondary batteries have a high operating voltage and energy density per unit weight, thus are more suitable for potable electronic devices.

A general battery pack of the lithium secondary battery typically includes a bare cell capable of charging and discharging; a protection circuit board electrically coupled with the bare cell, the protection circuit board controlling charging and discharging and intercepting a circuit at the time of over charge and over discharge; and a resin molding. The resin molding portion tends to be formed as an external case by a hot melting method that involves filling hot melt resin into a gap between the bare cell and the protection circuit board to prevent the protection circuit board from being separated from the bare cell, and it is generally capable of being mounted on an external electronic device. The battery pack usually includes a separate holder for supporting the resin molding portion so as to prevent it from being separated from the bare cell by an external force between the bare cell and the protection circuit module resulting from bending, twisting and falling of the battery.

The manufacture of a conventional battery pack completed by resin molding uses resin at high temperature and high pressure to fill the small gap between the bare cell and the protection circuit board, and the resin can break down various electronic components of the protection circuit board.

Also, in such a conventional battery pack, an external terminal installed in the protection circuit module for electrically coupling the bare cell with an external electronic device is normally formed as a flat pad. When such an external terminal is coupled with a connection part formed in the external electronic device by surface contact, if an external shock (for example caused by falling) is applied to the battery, the surface contact can be cut off by the external shock. Accordingly, the instability of the electrical connection between the battery pack and the external electronic device becomes a problem.

In addition to the above, when such a pad-type external terminal of a conventional battery pack is coupled with the connection part of the external electronic device by push contacts, when the number of the pushing increases, a coating layer on the surface of the external terminal can peel off or crack. When such cracking of the coating layer of an external terminal of the battery pack gets serious, the electrical flow between the battery pack and the external electronic device can become unstable or cut off. Also, because the pad-type external terminal of the battery pack is directly exposed to the outside of the battery pack, it could be corroded by moisture in the air as a long period of time elapses.

Accordingly, an improved battery pack is desirable.

JP 2006 004783 A and WO 2006/046343 A disclose battery pack, comprising a bare cell including a cap plate on the upper part of the bare cell; and a circuit accessory coupled with the upper part of the bare cell, wherein a fixing member is formed to protrude from an outer surface of the cap plate, a fixing member hole corresponding to the fixing member is formed in the circuit accessory, and the fixing member is inserted in and is coupled with the fixing member hole. In addition, these documents disclose a fabricating method of a battery pack, comprising: preparing a bare cell on which a fixing member is installed; preparing a circuit accessory in which a fixing member hole corresponding to the fixing member is formed; inserting the fixing member in the fixing member hole, and coupling the circuit accessory and the bare cell by an expanding deformation of said fixing member; and electrically coupling the bare cell and the circuit accessory.

JP 2006004783 discloses a battery pack having a protection circuit module joined to a cap plate using a projection member.

WO 2006/046343A discloses a battery pack in which a protection circuit module is joined to a cap plate using a variety of mechanisms.

JP 2003308881 discloses a battery pack in which a protection circuit module is fitted to a cap plate using an integrally formed projection member.

US 2006/099492 discloses a battery pack in which a protection circuit is attached to a bare cell using lugs.

US 2004/0251872 discloses a battery pack in which a protection circuit is accommodated within a cover.

### SUMMARY OF THE INVENTION

It is therefore an object of the present invention to provide improved battery pack and improved process for manufacturing packs.

It is another object to provide a battery pack and a fabricating method thereof capable of increasing the coupling strength between a bare cell and a circuit accessory thus preventing the circuit accessory from being separated from the bare cell due to external forces like bending, twisting and falling of a battery, by forming a fixing member protruding from the upper part of the bare cell, and coupling the fixing member with a fixing member hole of the circuit accessory that is formed in advance by injection molding in the type of the fixing member being laid across the fixing member hole.

Additional advantages, objects and features of the invention will be set forth in part in the description which follows and in part will become apparent to those having ordinary skill in the art upon examination of the following or may be learned from practice of the invention.

According to an aspect of the present invention, there is provided a battery pack, as set out in Claim 1. Preferred features of this aspect of the invention are set out in Claims 2 to 12.

According to another aspect of the present invention, a fabricating method of a battery pack, comprises the features of Claim 13. Preferred features of this aspect of the invention are set out in Claims 14 to 23.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicated the same or similar components, wherein:
FIG. 1 is a perspective diagram illustrating a completed battery pack according to one embodiment of the present invention;
FIG. 2 is a perspective diagram illustrating the battery pack of FIG. 1 when disassembled;
FIG.3 is a perspective diagram illustrating a bare cell before a circuit accessory is coupled thereto in the battery pack of FIG. 2;
FIG. 4 is a perspective diagram illustrating a circuit accessory with the inside thereof facing upward in the battery pack of FIG. 2;
FIG. 5 is a perspective diagram illustrating a bare cell and a circuit accessory coupled by covering the bare cell of FIG. 3 with the circuit accessory of FIG. 4;
FIG. 6 is an internal perspective diagram illustrating the upper part of the battery pack illustrated in FIG. 5;
FIG. 7 is a cross-sectional diagram of the fixing member of FIG. 6;
FIG. 8a is a cross-sectional diagram of another form of the fixing member illustrated in FIG. 7;
FIG. 8b is a cross-sectional diagram of another form of the cap plate illustrated in FIG. 7;
FIG. 9a is a perspective diagram illustrating the fixing member of FIG. 6 as changed by a spinning or punching process;
FIG. 9b is a cross-sectional diagram illustrating the fixing member of FIG. 9a;
FIG. 10 is a partial perspective diagram illustrating a fixing member inserted in a fixing member hole of an upper cover in a battery pack according to another embodiment of the present invention;
FIG. 11a is a partial perspective diagram illustrating a washer inserted on the fixing member of FIG. 10;
FIG. 11b is a cross-sectional diagram illustrating the fixing member of FIG. 11a;
FIG. 12a is a perspective diagram illustrating the fixing member of FIG. 11a changed by a spinning or punching process;
FIG. 12b is a cross-sectional diagram illustrating the fixing member of FIG. 12a.
FIG. 13 is a perspective diagram illustrating a separated battery pack still according to another embodiment of the present invention; and
FIG. 14 is a flow diagram illustrating a fabricating method of a battery pack according to the present invention.

### DETAILED DESCRIPTION OF THE INVENTION

Hereinafter, preferred embodiments of the present invention will be described in detail with reference to the accompanying drawings. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the entire description of the present invention, the same drawing reference numerals are used for the same elements across various figures.

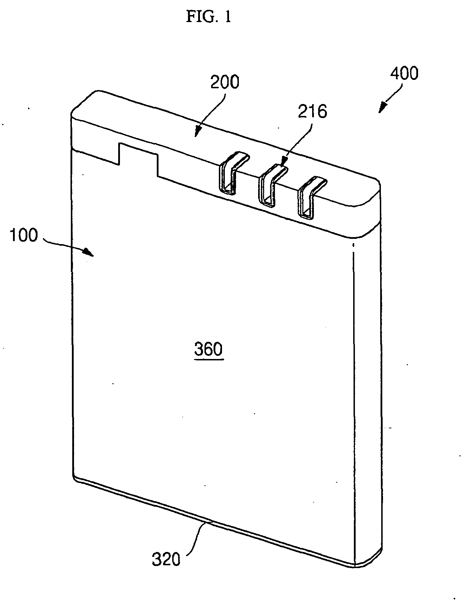

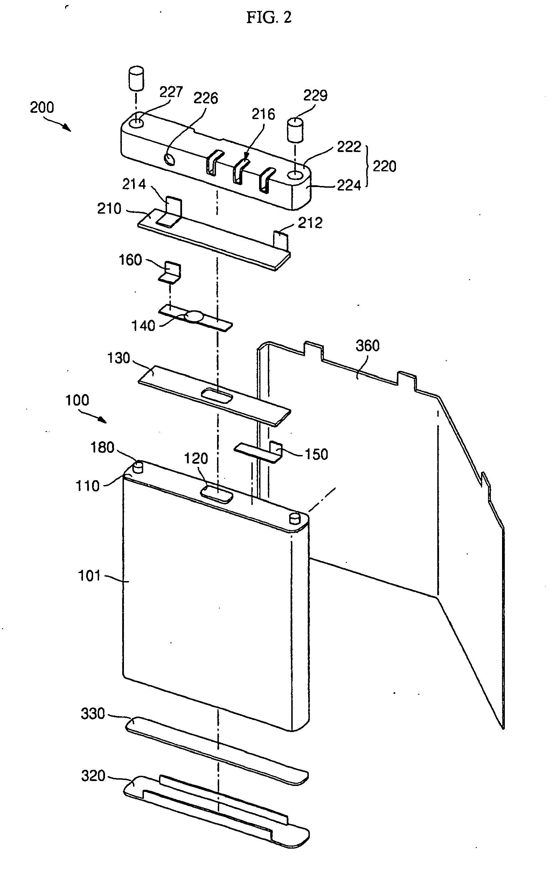

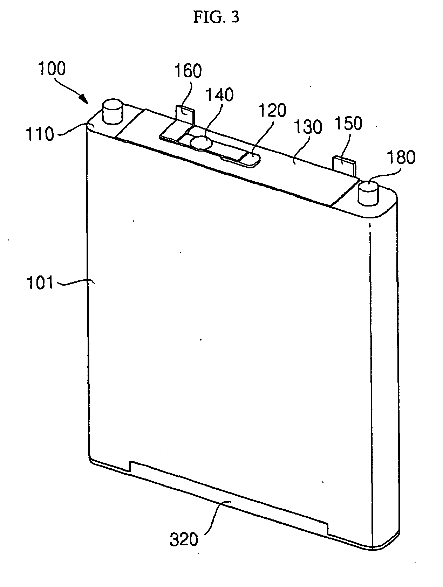

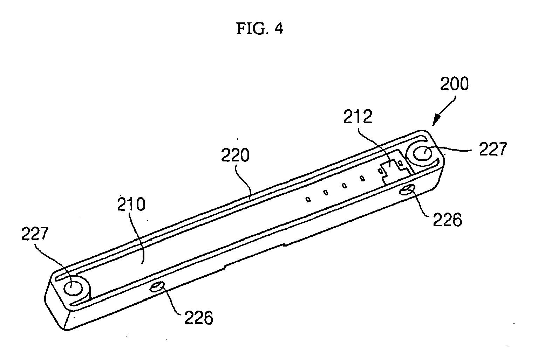

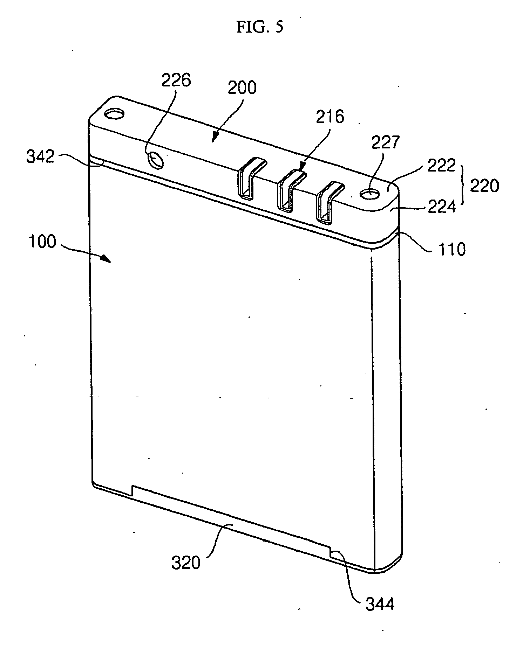

Turning now to the drawings, Figures 1 through 4 collectively, FIG. 1 is a perspective diagram illustrating a completed battery pack according to one embodiment of the present invention, FIG. 2 is a perspective diagram illustrating the battery pack of FIG. 1 when disassembled, FIG.3 is a perspective diagram illustrating a bare cell before a circuit accessory is coupled thereto in the battery pack of FIG. 2, FIG. 4 is a perspective diagram illustrating a circuit accessory with the inside thereof facing upward in the battery pack of FIG. 2, FIG. 5 is a perspective diagram illustrating a bare cell and a circuit accessory coupled by covering the bare cell of FIG. 3 with the circuit accessory of FIG. 4.

Referring to FIGS. 1 and 2, a battery pack 400 according to an embodiment of the present invention includes a bare cell 100 having a fixing member 180, a circuit accessory 200 coupled with bare cell 100, a lower cover 320 formed in the lower part of the bare cell 100 and a label 360.

Bare cell 100 includes an electrode assembly (not shown) having a positive electrode, a negative electrode and a separator interposed between the positive electrode and the negative electrode; a can 101 receiving the electrode assembly and an electrolyte (not shown); and a cap assembly including a cap plate 110 closing the opening portion of can 101.

Bare cell 100 includes a positive electrode terminal and a negative electrode terminal to supply charged power in the state of being electrically coupled with circuit accessory 200 through a positive electrode lead plate 150 and a negative electrode lead plate 160. In embodiments of the present invention, the positive electrode terminal can be cap plate 110 itself of a metal plate (not shown) coupled on cap plate 110. A negative electrode terminal 120 is a terminal protruding perpendicularly from cap plate 110, and is electrically insulated from cap plate 110 by an insulator gasket (not shown) interposed therebetween. Naturally, the polarity of cap plate 110 playing the role of the positive electrode terminal and negative electrode terminal 120 can be different according to the requirements of different embodiments.

The positive electrode lead plate 150 and the negative electrode lead plate 160 that electrically couple the bare cell 100 with the circuit accessory 200 have a shape of "L" approximately, and are made of a conductive material, for example, nickel or nickel alloy. Such a positive electrode lead plate 150, as illustrated in FIG. 3, is electrically coupled with the bare cell 100, with one side thereof being coupled with cap plate 110 by a method such as welding.

To prevent a short circuit due to unnecessary connection between the bare cell 100 and a printed circuit board 210 of the circuit accessory 200, an electrically insulating tape 130 is installed on the outer surface of the upper part of the bare cell 100, i.e., on the outer surface of the cap plate 110. The electrically insulating tape 130 is made of an adhesive material in the same size as the printed circuit board 210 of the circuit accessory 200.

The negative electrode lead plate 160, as illustrated in FIG. 3, is electrically coupled with a current control unit such as a PTC (Positive Temperature Coefficient) device 140 whose one side is connected with negative electrode terminal 120, and is electrically coupled with the bare cell 100. PTC device 140 prevents firing and explosion of the battery by short-circuiting an internal circuit thus prevents further current from flowing when the internal temperature of the battery rises, or the voltage of the battery rises due to over charge. Herein, the PTC device 140 connected to one side of the negative electrode lead plate 160 by a method such as welding is adhered and fixed to the upper part of the cap plate 110 by the electrically insulating tape 130 made of an adhesive material.

The battery pack 400 further includes fixing member 180 formed on the outer surface of the cap plate 110 formed on the upper part of the bare cell 100.

Fixing members 180 are installed in the shape of fixing members protruding on both side portions in the longitudinal direction of the cap plate 110. The fixing members 180 are formed as protruding structures of the cap plate 110 by rolling. Herein, the fixing members 180 can be made of the same material as cap plate 110, e.g. aluminum or aluminum alloy. The fixing members 180 fix the circuit accessory 200 to the bare cell 100 and support the circuit accessory 200 against external forces in order to prevent the circuit accessory 200 from being separated from the bare cell 100. Detailed explanation of the structure and the role of fixing members 180 will follow.

Referring to FIGS. 2 and 4, the circuit accessory 200 is disposed on the upper part of the bare cell 100, i.e., on the upper part of cap the plate 110, and includes a printed circuit board (PCB) 210, an upper cover 220 and an external terminal 216.

PCB 210 is a panel made of resin, on which a protection circuit (not shown) such as a circuit making the charging state uniform by controlling the charge and discharge of the battery, or a circuit preventing over discharge and over charge is formed. Although not shown in the drawing, circuit devices (not shown) are formed on PCB 210 to embody a charge discharge circuit (not shown) and a protection circuit (not shown).

Electrical connection plates are installed on PCB 210 to electrically couple the bare cell 100 and the PCB 210 of the circuit accessory 200. The electrical connection plates include a positive electrode connection plate 212 and a negative electrode connection plate 214. The positive electrode connection plate 212 and the negative electrode connection plate 214 installed in this manner are formed approximately in the shape of "L" for the electrical connection with the other side of the positive electrode lead plate 150 and the other side of negative electrode lead plate 160, respectively. Generally, the lead plates 150,160 and the electrical connection plates 212,214 are coupled by spot welding, respectively.

Upper cover 220 includes a principal plane 222 having a shape and a size corresponding to those of the cap plate 110, and a skirt 224 bent and extended from the edge of the principal plane 222 to the direction of the bare cell 100. Such an upper cover covers and protects the PCB 210.

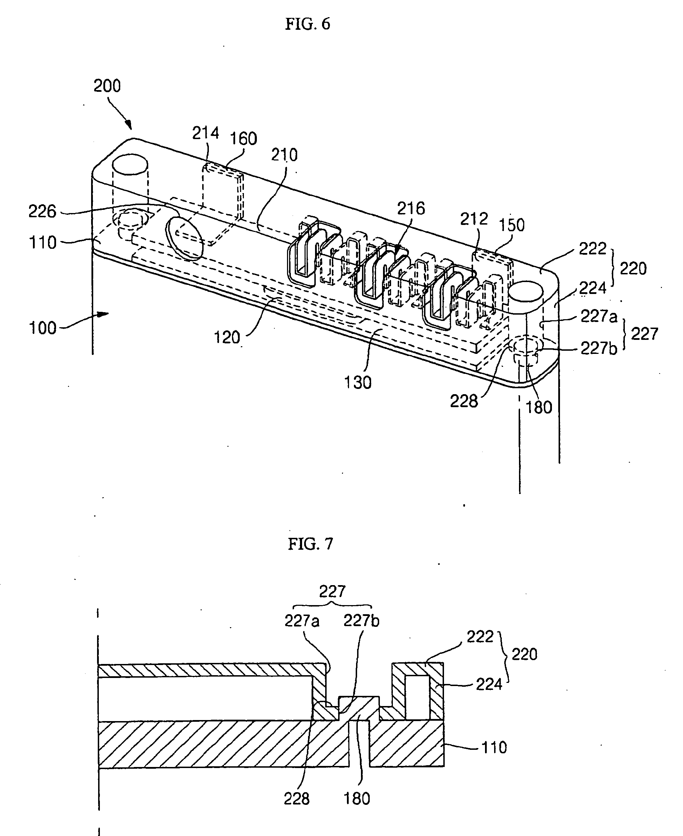

Upper cover 220 further includes fixing member holes 227 at positions perpendicularly corresponding to fixing member 180 of the bare cell 100. The bare cell 100 and the circuit accessory 200 are coupled by inserting the fixing members 180 in fixing member holes 227. The coupling of the bare cell 100 and the circuit accessory 200 will be explained in more detail with reference to FIGS. 6 to 9b.

Also, upper cover 220 includes weld holes 226 on the skirt 224 corresponding to the locations of the electrical connection plates 212,214 coupled with the lead plates 150,160 of the bare cell 100 for the electrical coupling of the circuit accessory 200 including the PCB 210 and the bare cell 100. The, weld holes 226 may have any suitable shape, e.g. a circle or a polygon.

The negative electrode lead plate 160 and the negative electrode connection plate 214, and the positive electrode lead plate 150 and positive electrode connection plate 212 can be coupled through the weld holes 226 by resistance welding. One weld hole 226 is formed in the skirt 224 corresponding to the negative electrode connection plate 214 in FIG. 2, and a weld hole 226 is also formed on skirt 224 corresponding to the negative electrode connection plate 214 in the opposite direction, and therefore serial type resistance welding can be used. In contrast, a weld hole is formed on the skirt 224 on one side corresponding to the positive electrode connection plate 212 and the positive electrode lead plate 150 as well, thus direct type resistance welding can be used. Herein, the reason that only one weld hole for the resistance welding of the positive electrode lead plate 150 and the positive electrode connection plate 212 respectively is that it is, in this particular embodiment, difficult to weld through two weld holes because an external terminal 216 is disposed on the position on which the positive electrode connection plate 212 is formed.

The external terminal 216 is installed between the PCB 210 and the upper cover 220 and electrically couples the PCB 210 with an external electronic device (not shown). Herein, the external terminal 216 is formed as a connector of a type that lets the electrical connection part (not shown) formed on the external electronic device (not shown) inserted therein. This configuration can solve the problems of electrical power interruption, and cracking and corrosion of a coating layer that can occur in the existing pad type external terminal. Such an external terminal 216 is installed on the upper cover 220 that has been previously formed by injection molding, or on the PCB 210.

After the bare cell 100 and the circuit accessory 200 are coupled together, a stopper 229 for sealing the fixing member hole 227 is installed. Such a stopper forms a part of the exterior of the battery pack 400. The, stopper 229, rubber, gluegon and silicon. Also, the stopper 229 may be made of a polymer material having good adhesive property.

The, lower cover 320 is physically attached to the lower part of the bare cell 100, and such coupling is made by a strip or length of tape 330 with opposite major surfaces both coated with layers of an adhesive. The tape 330 may serve as an electrical insulator. Such a lower cover 320 protects against external shock, for example damage caused when the battery is accidentally dropped.

The label sheet 360 encloses the circumferential surface of the bare cell 100 finally, in the state of the upper cover 220 and the lower cover 320 illustrated in FIG. 5 are coupled with the upper part and the lower part of the bare cell 100, respectively. The label 360 reinforces the coupling force of the upper cover 220 and the lower cover 320, and reinforces the coupling force of the exteriors of the upper cover 220, the lower cover 320 and the bare cell 100. Herein, the label 360 is formed to cover the weld hole 226 of the upper cover 220, the contact portion 342 of the upper cover 220 and the bare cell 100 and a contact portion 344 of the lower cover 320 and the bare cell 100 illustrated in FIG. 5, and is adhered to the circumferential surface of the bare cell 100.

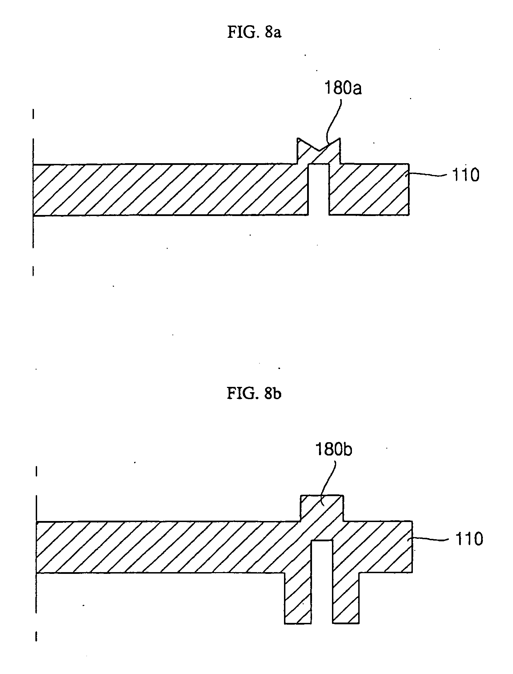

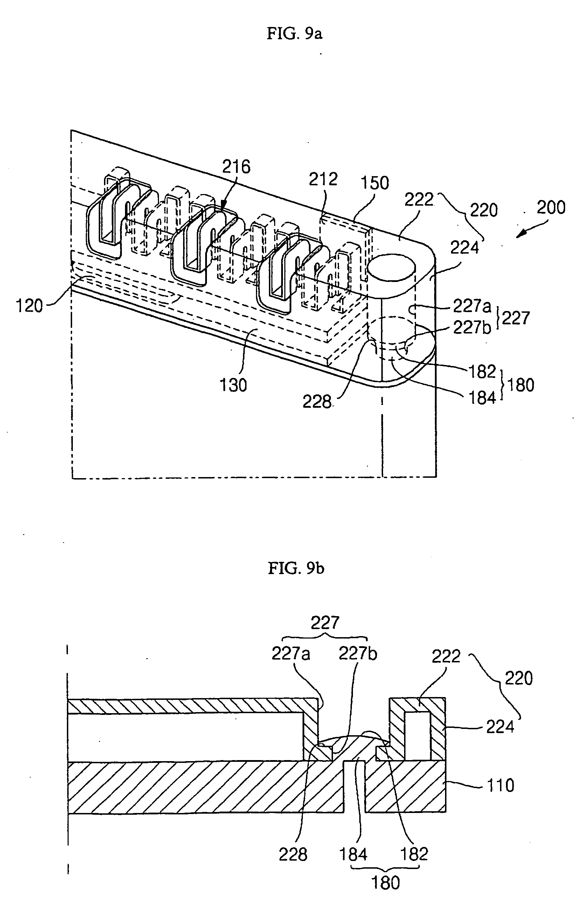

FIG. 6 is an internal perspective view illustrating the upper part of the battery pack illustrated in FIG. 5, FIG. 7 is a cross-sectional diagram of the fixing member of FIG. 6, FIG. 8a is a cross-sectional diagram of another form of the fixing member illustrated in FIG. 7, FIG. 8b is a cross-sectional diagram of another form of the cap plate illustrated in FIG. 7, FIG. 9a is a perspective diagram illustrating that the fixing member of FIG. 6 is changed by a spinning or punching process, FIG. 9b is a cross-sectional diagram illustrating the fixing member of FIG. 9a.

When looking into the coupling structure of the bare cell 100 and the circuit accessory 200 formed by coupling the PCB 210 and the upper cover 220, firstly, as illustrated in FIG. 6, the fixing member 180 formed in the shape of a protruding fixing member on the cap plate 110 of the bare cell 100 is inserted in the fixing member hole 227 of the upper cover 220.

The fixing member hole 227 is formed in a direction from the outer surface of the principal plane 222 to the inside of the upper cover 220 on a position perpendicularly corresponding to fixing member 180 formed on the cap plate 110 of the bare cell 100, and includes an upper hole 227a and a lower hole 227b.

The diameter of upper hole 227a is formed to be greater than the diameter of the lower hole 227b to form a peripheral flange around the stepped surface 228 between the upper hole 227a and the lower hole 227b. Also, the height of the lower hole 227b is shorter than the protruding height of the fixing member 180 to make the fixing member 180 in the shape of a protruding fixing member above the stepped surface 228 when the fixing member 180 is inserted in the fixing member hole 227. In other word, the fixing member 180 inserted in lower hole 227b of fixing member hole 227 protrudes above stepped surface 228.

Such fixing members 180 are formed to protrude on both side portions in the longitudinal direction of cap plate 110, and are formed to have a diameter smaller than or identical to that of lower holes 227b, so as to be easily inserted in the lower hole 227b of the fixing member hole 227 of the upper cover 220. As described above, fixing members 180 can be formed by rolling the cap plate 110.

As illustrated in FIG. 7, which shows a cap plate not in accordance with the present invention, when the fixing member is formed by rolling the cap plate 110 having a uniform thickness, the protruding height of fixing member 180 from the outer surface of the cap plate 110 is formed to be 1/2 to 2/3 of the thickness of the cap plate 110 which is, for example, 0.4 to 0.8mm. If the protruding height of the fixing member 180 is less than 1/2 of the thickness of the cap plate 110, then the protruding height of the fixing member 180 is too short and thus the fixing member 180 may not protrude sufficiently above the stepped surface 228 when the bare cell 100 is covered with the upper cover 220. In such a case it would be difficult to perform a spinning or punching process to make the fixing member 180 overlap the stepped surface 228 of the fixing member hole 227 in order to fix the upper cover 220 to the bare cell 100. On the other hand, if the protruding height of the fixing member 180 exceeds 2/3 of the thickness of the cap plate 110, then the thickness of the cap plate 110 on which the fixing member 180 is formed becomes too thin and the cap plate 110 becomes structurally weak.

The fixing member 180 may be formed in a variety of shapes, a further example of which is illustrated in FIG. 8a. Referring to FIG. 8a, the fixing member 180a is formed to have a concave recess in the upper surface. This makes the upper part of fixing member 180a easy to spread laterally so as to overlap the stepped surface 228 of the fixing member hole 227 when a spinning or punching process is performed on fixing member 180a in order to fix circuit accessory 200 to the bare cell 100. That is, the fixing member 180a having a concave recess in the upper part has smaller internal density in the upper part than the fixing member 180 that has no concave recess in the upper part, and thus the force pushing the upper part of the fixing member 180a is well transmitted to the edge portion of the concave recess during the spinning or punching process. Accordingly, the upper part of the fixing member 180a can be laterally spread and be laid across stepped surface 228 of fixing member hole 227 better than the upper part of the fixing member 180 illustrated in FIG. 7. In this particular embodiment, the perpendicular section of the concave recess is a polygon, in the form of an inverted triangle. However, the shape of the perpendicular section is not limited to an inverted triangle and does not have to be a polygon. The concave recess has only to be formed in the central part of the upper surface of fixing member 180.

Also, in accordance with the present invention, a fixing member 180b illustrated in FIG. 8b can be formed to protrude from the outer surface of a cap plate 110 by rolling cap plate 110 whose thickness is not uniform as a whole, differently from the cap plate illustrated in FIG. 7. That is, in the cap plate 110, the thickness of the area on which the fixing member 180b is formed is made to be thicker than that of the other area. This is because the part of the cap plate having a thin thickness can be transformed by the force generated by the rolling process at the time of the rolling process for making the fixing member protruded from the outer surface of the cap plate.

Herein, the thickness of the area of the cap plate 110 on which the fixing member 180b is formed is formed to be twice to three times of the thickness of the other area of the cap plate 110. If the thickness of the area of the cap plate 110 on which the fixing member 180b is formed is less than twice of the thickness of the other area of cap plate110, it may not be sufficient to prevent the deformation of cap plate 110 at the time of the rolling of cap plate 110. If the thickness of the area of cap plate 110 on which fixing member 180b is formed is more than three times of the thickness of the other area of cap plate 110, the thickness of the cap plate 110 becomes too thick and it is not easy to perform the rolling process of the cap plate 110 to form the fixing member 180b.

In FIG.8b, a concave recess (not shown) whose perpendicular section is an inverted triangle may be formed on the upper surface of the fixing member 180b like the fixing member 180a illustrated on FIG. 8a.

Figures 9a and 9b show how the fixing members 180 are deformed to have a T-shaped perpendicular section, i.e., to have the shape of having a head portion 182 and a post portion 184 by the spinning or punching process.

The head portion 182 of the fixing members 180 overlaps the stepped surface 228 on the inner surface of the fixing member hole 227 and the post portion 184 is disposed in the lower hole 227b and thereby the fixing member 180 holds the upper cover 220 including the fixing member hole 227. Herein, the diameter of head portion 182 is greater than the diameter of lower hole 227b, and is less than or equal to the diameter of upper hole 227a.

Such "T" shaped fixing members 180 are formed on both side portions of the upper part of the bare cell 100, and couple the circuit accessory 200 including the upper cover 220 with the bare cell 100, and play the role of a support to prevent the circuit accessory 200 from being separated from the bare cell 100 by an external force. In one embodiment of the present invention, the upper cover 220 is firstly coupled with the PCB 210, and then with the bare cell 100, but the PCB 210 can be firstly connected with the electrically coupled bare cell 100.

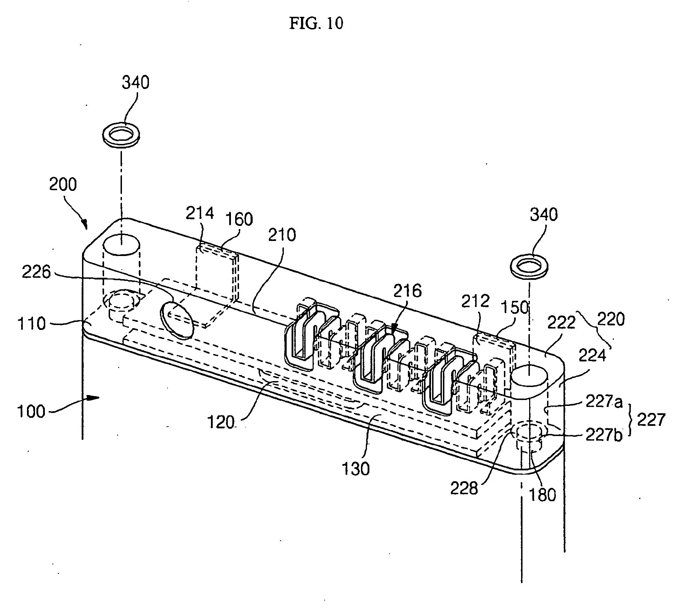

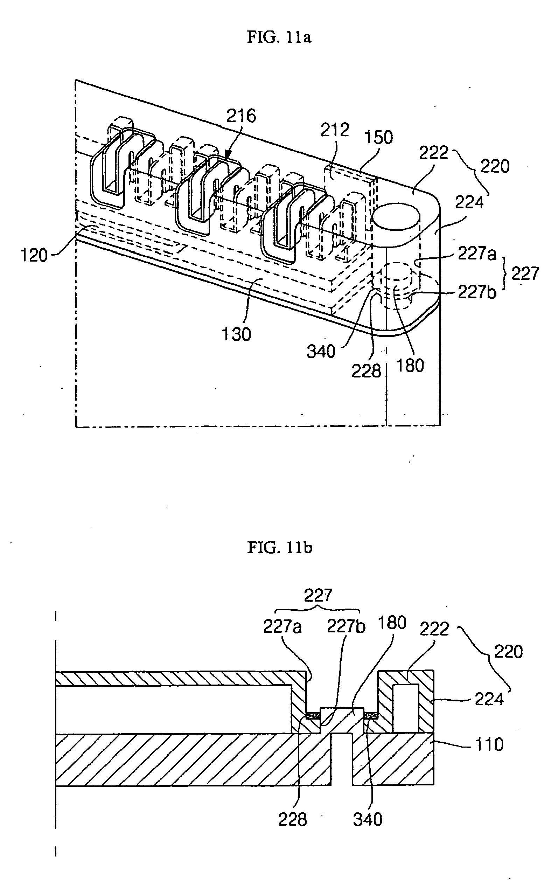

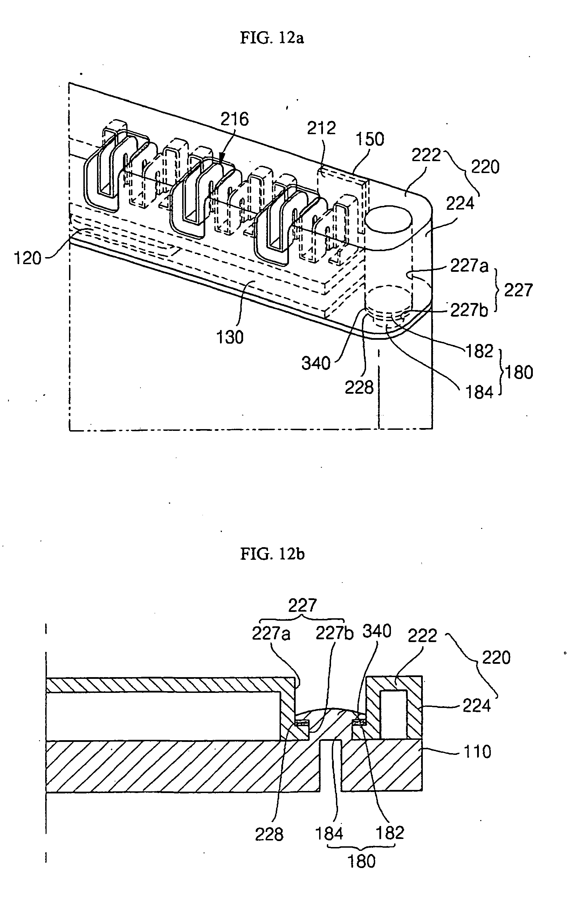

FIG. 10 is a partial perspective diagram illustrating a fixing member inserted in a fixing member hole of an upper cover in a battery pack according to another embodiment of the present invention, FIG. 11a is a partial perspective diagram illustrating a washer inserted on the fixing member of FIG. 10, FIG. 11b is a cross-sectional diagram illustrating the fixing member of FIG. 11a, FIG. 12a is a perspective diagram illustrating the fixing member of FIG. 11a changed by a spinning or punching process, FIG. 12b is a cross-sectional diagram illustrating the fixing member of FIG. 12a.

When compared with the battery pack according to the above embodiments of the present invention, the battery pack according to this further embodiment of the present invention has the same constitutional elements except that an additional washer (support ring) is installed on a fixing member inserted in a fixing member hole of an upper cover. Therefore, the same drawing reference numerals will be used for the same elements, and explanation on the same elements will be omitted. Therefore, in the battery pack according to another embodiment of the present invention, explanation will be focused on the washer.

Referring to FIGS. 10 to11b, the battery pack according to this embodiment of the present invention further includes a washer 340 inserted on a fixing member 180 in the shape of a fixing member inserted in a fixing member hole 227 of an upper cover 220.

As illustrated in FIG. 10, the outer diameter of the washer 340 is less than or equal to the diameter of the upper hole 227a of the fixing member hole 227 and the inner diameter of the washer 340 is greater than or equal to the diameter of the lower hole 227b. This is to insert washer 340 on fixing member 180 in the shape of a fixing member protruding above stepped surface 228 after passing the lower hole 227b of the fixing member hole 227, as illustrated in FIGS. 11a and 11b.

The fixing member 180 in the shape of a fixing member on which the washer 340 is inserted is changed to have a "T" shaped perpendicular section, i.e., to have the shape of having a head portion 182 and a post portion 184 by a spinning process or a punching process as illustrated in FIGS. 12a and 12b. The head portion 182 of the fixing member 180 is disposed in the structure of being laid across the washer 340 and the post portion 184 is disposed in the lower hole 227b, and thus the fixing member 180 holds the upper cover 220 including the fixing member hole 227. Here, the diameter of the head portion 182 is greater than the diameter of the lower hole 227b and less than or equal to the diameter of the upper hole 227a.

Such a washer 340 is made of a stainless steel. Accordingly, the washer 340 having strength and is disposed on the coupling portion of the T-shaped fixing member 180 and the stepped surface 228 of the fixing member hole 227, and thereby makes the coupling strength stronger than in a case where the T shaped fixing member 180 is coupled on the stepped surface 228 of the fixing member hole 227 without a separate support member.

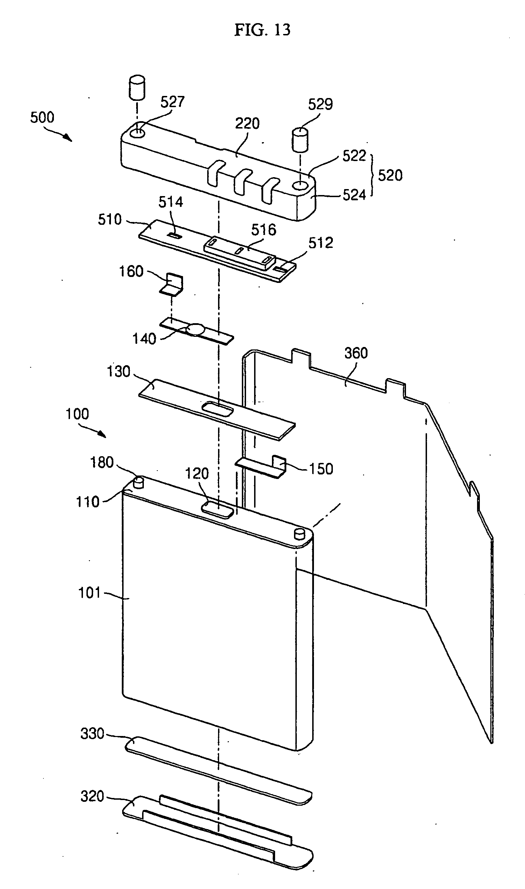

FIG. 13 is a perspective diagram illustrating a separated battery pack according to still another embodiment of the present invention. When compared with the battery pack according to previous embodiments of the present invention, the battery pack according to this embodiment of the present invention has the same constitutional elements except for the structure of the PCB of the circuit accessory. Therefore, the same drawing reference numerals will be used for the same elements, and explanation on the same elements will be omitted. Therefore, in the battery pack according to this embodiment of the present invention, explanation will be focused on the structure of the PCB electrically coupled with the bare cell.

The battery pack is formed by initially electrically coupling a PCB 510 of a circuit accessory 500 with a bare cell 100 and then covering the PCB 510 with the upper cover 520 as it is to be coupled with the bare cell 100.

A circuit accessory 500 includes PCB 510, an external terminal 516 and upper cover 520.

The PCB 510 includes sockets 512, 514 instead of the electrical connection plates installed in the PCB 210 illustrated in FIG. 2, and, an external terminal 516 is installed on PCB 510. The socket electrically couples the PCB and the bare cell 100. Specifically, an positive electrode lead plate 150 installed on the bare cell 100 is electrically coupled by inserting it in the socket 512, and a negative electrode lead plate 160 is electrically coupled by being inserted in the socket 514. The sockets 512, 514 may be formed in the shape of a hole or a groove to let lead plates 150,160 inserted therein. Herein, sockets 512, 514 are installed in a portion of the PCB 510 excluding the area where the external terminal 516 is installed.

The battery pack according to this embodiment of the present invention can make the coupling of the bare cell 100 and the PCB 510 easier than in the above embodiments as a consequence of inserting the lead plates 150, 160 in the sockets 512, 514. It can also reduce the manufacturing costs as there is no need for separate electrical connection plates 212, 214.

The external terminal 516 can be installed on the PCB 510 or on the upper cover 520 including a principal plane 522 and a skirt 524, as explained above, but is installed on the PCB 510 in another embodiment of the present invention.

As shown above, the fixing members 180 of the bare cell 100 electrically coupled with PCB 510 are inserted in fixing member holes 527 of the upper cover 520, and the connection is secured by a spinning or punching process. Accordingly, the upper cover 520 and the bare cell 100 are coupled. Then, fixing member hole 527 of upper cover 520 is sealed with a stopper 529.

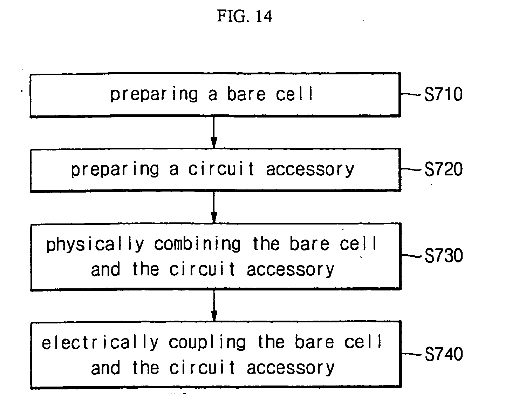

Referring to FIG. 14, the fabrication method of a battery pack according to an embodiment of the present invention is as follows.

The method includes a step of preparing a bare cell having a fixing member installed on the upper part thereof (S710), a step of preparing a circuit accessory having a fixing member hole formed thereon (S720), a step of assembling by physically combining the circuit accessory and the bare cell (S730) and a step of electrically coupling the bare cell and the circuit accessory (S740).

Referring to FIGS. 2 and 3, in the step of preparing a bare cell having a fixing member installed on the upper part thereof (S710), an electrode assembly (not illustrated) and an electrolyte (not shown) are received in the opening portion of a can 101, and fixing members 180 are installed on the upper part of the bare cell 100 formed by closing the opening portion of the can 101 with a cap plate 110 of the cap assembly.

The fixing members 180 are formed in the shape of protruding fixing members from the outer surface of both side portions in the longitudinal direction of cap plate 110. Such fixing members 180 are formed by rolling the cap plate 110. The protruding height of the fixing member 180 protruded from outer surface of the cap plate 110 by a rolling process is formed to be 1/2 to 2/3 of the thickness of the cap plate 110.

Lead plates 150, 160 are installed on the cap plate 110 of the bare cell 100 on which the fixing members 180 are installed.

Referring to FIGS. 2 and 4, in the step of preparing a circuit accessory on which a fixing member hole is formed (S720), a PCB 210 including electrical connection plates 212, 214 to be coupled with the lead plates 150, 160 installed on the bare cell is prepared. An upper cover 220 covering the PCB 210 and including fixing member holes 227 is prepared. An external terminal 216 is installed on the PCB 210 or the upper cover 220 for the electrical connection with the PCB 210. Herein, external terminal 216 is installed on upper cover 220 to electrically couple with the PCB 210. Such an external terminal part 216 is formed to be connector type.

The upper cover 220 is prepared by extruding a principal plane 222 having a shape and a size corresponding to those of cap plate 110 and a skirt 224 bent and extended from the edge of principal plane 222 to the direction of bare cell 100; disposing a fixing member hole 227 on principal plane 222 corresponding to the fixing member 180; and forming at least one weld hole 226 on the skirt 224 corresponding to the electrical connection plates 212, 214 of the PCB 210 all together.

The fixing member hole 227 of the upper cover 220 includes an upper hole 227a and a lower hole 227b formed in a direction from the outer surface of the principal plane 222 to the inside of upper cover 220, and the diameter of the upper hole 227a is formed to be greater than the diameter of lower hole 227b to form a stepped surface 228 between the upper hole 227a and the lower hole 227b. The height of lower hole 227b is formed to be smaller than the protruding height of the fixing member 180 to make the fixing member in the shape of a protruding fixing member above stepped surface 228 when fixing member 180 is inserted in fixing member hole 227.

Referring to FIGS. 6 to 9b, in the step of physically coupling a circuit accessory and a bare cell (S730), the fixing member 180 in the shape of a fixing member installed in the upper part of the bare cell 100 is inserted to pass through lower hole 227b of fixing member hole 227 of upper cover 220 and protrude above stepped surface 228. The fixing member 180 is deformed to have a head portion that overlaps the stepped surface 228 and a post portion 184 disposed in lower hole 227b by a spinning or punching process. In another embodiment of this invention, referring to FIGS. 10 to 12b, before the fixing member 180 is transformed by spinning or punching, a washer 340 is inserted on fixing member 180, and then the fixing member is deformed to be a head portion 182 overlapping the washer 340 and a post portion 184 disposed in lower hole 227b by a spinning or punching process. Likewise, the bare cell 100 and the circuit accessory 200 can be fixed and coupled by letting fixing member 180 of bare cell 100 be laid across stepped surface 228 of circuit accessory 200 or washer 340.

Referring to FIGS. 2 and 5, in the step of electrically coupling a bare cell and a circuit accessory (S740), the bare cell 100 and the circuit accessory 200 are electrically coupled by welding the lead plates 150, 160 of the bare cell 100 and the electrical connection plates 212, 214 of the PCB 210 included in circuit accessory 200 through the weld hole 226 of the upper cover 220.

The battery pack is completed by covering and sealing the fixing member hole 227 of the upper cover 220 with a stopper, and adhering a label 360 to the side portion of the bare cell 100, including the weld hole 226 of the upper cover 220 and the contact portion 342 of upper cover 220 and bare cell 110.

In another embodiment of this invention, referring to Fig. 12, in the step of preparing a circuit accessory (S720), the electrical connection plates 212, 214 coupled with lead plates 150, 160 are removed and the sockets 512, 514 are formed on the PCB 510. In such a situation bare cell 100 and PCB 510 can be electrically coupled by simply inserting the lead plates 150, 160 of the bare cell 100 in the sockets 512, 514 of the PCB 510 included in the circuit accessory 500 respectively.

As described above, a battery pack and fabricating method thereof according to the present invention can firmly fix and couple a circuit accessory on a bare cell and makes the circuit accessory be supported by the bare cell simultaneously and prevents the circuit accessory from being separated from the bare cell by an external force resulting from bending, twisting and falling of the battery, by forming a fixing member protruding from the upper part of the bare cell, and coupling the fixing member with a fixing member hole formed on an upper cover previously formed by injection molding in the type of the fixing member being laid across the fixing member hole.

Accordingly, the battery pack and the fabricating method thereof according to embodiments of the present invention prevents electronic components from being damaged by resin of high temperature and high pressure such as when a bare cell and a protection circuit board are coupled by molding resin in a conventional battery pack, and does not require installation of a holder in order to assure that a resin molding portion . Therefore, increase of the entire fabricating cost due to a separate holder can be prevented.

Also, a battery pack and fabricating method thereof according to the present invention can prevent power interruption cracking and corrosion of an external terminal that can occur when a conventional battery pack having a flat pad type external terminal is coupled with an external electronic device.

For the avoidance of doubt features from the previous embodiment described above can be selected and combined, for example, it is possible for a single embodiment to employ two different types of fixing members and/or fixing holes.

Although expressions such as "upper" and "lower" are used throughout this specification, this is merely for ease in describing and defining features of the invention and the embodiments using the orientations shown in the figures. It should be understood in particular that this method of description does not preclude the described device from being reoriented.

## Claims

1. A battery pack (400), comprising:
a bare cell (100) including a cap plate (110) on the upper part of the bare cell (100); and
a circuit accessory (200) coupled with the upper part of the bare cell (100), wherein a fixing member (180) is formed to protrude from an outer surface of the cap plate (110), a fixing member hole (227) corresponding to the fixing member (180) is formed in the circuit accessory (200), and the fixing member (180) is inserted in and is coupled with the fixing member hole (227); **characterised in that** the cap plate (110) has a thickness that is from twice to three times that of the rest of the area in an area adjoining the area on which the fixing member (180) is formed and the fixing member is integrally formed on the cap plate.

2. A battery pack according to Claim 1, the said battery pack further comprising a stopper (229) made of a material selected among rubber, glue and silicon installed to seal the fixing member hole (227).

3. A battery pack according to claim 1 or 2 wherein the fixing member (180) overlaps an inner surface of the circuit accessory (200), and
wherein a section of the fixing member (180) coupled with the inner surface of the fixing member hole (227) is generally "T" shaped.

4. A battery pack according to any preceding claim, wherein the circuit accessory (200) is disposed on an upper part of the cap plate (110) and is electrically coupled with the bare cell (100) through a lead plate (150,160) installed on the cap plate (110), and
wherein the circuit accessory (200) comprises:
a printed circuit board (210) electrically coupled with the bare cell (100) by the lead plate (150,160);
an upper cover (220) covering the printed circuit board (210), including the fixing member hole (227) to couple the circuit accessory (200) with the bare cell (100) with a deformation of the fixing member (180); and
an external terminal (216) installed between the printed circuit board (210) and the cover, and electrically coupling the printed circuit board (210) and an external electronic device.

5. A battery pack according to claim 4, wherein the external terminal (216) is an electrical connector.

6. A battery pack according to claim 4 or 5, wherein the upper cover (220) comprises a principal plane (222) having a shape and a size corresponding to the cap plate (110) and a skirt (224) bent and extended from edges of the principal plane (222) to the periphery of the bare cell (100),
wherein the fixing member hole (227) includes an upper hole and a lower hole formed in a direction from the outer surface of the principal plane to the inside of the upper cover at a position perpendicularly conforming to the fixing member, and the diameter (227a) of the upper hole is greater than the diameter (227b) of the lower hole to form a peripheral flange around a stepped surface (228) between the upper hole and the lower hole, and
wherein the fixing member (180) includes a head portion (182) overlapping the peripheral flange and a post portion (184) disposed in the lower hole.

7. A battery pack according to claim 6, further comprising a washer (340) installed around the post portion (184) and between the stepped surface (228) and the head portion (182) of the fixing member (180), and
wherein the outer diameter of the washer (340) is less than or equal to the diameter of the upper hole of the fixing member hole (227), and the inner diameter of the washer (340) is greater than or equal to the diameter of the lower hole.

8. A battery pack according to claim 7, wherein the washer (340) is made of a stainless steel.

9. A battery pack according to any one of clams 6 to 8, wherein the diameter of the head portion (182) is greater than the diameter of the lower hole and is less than or equal to the diameter of the upper hole.

10. A battery pack according to any one of claims 6 to 9, wherein a concave recess having a cross-section of a polygonal shape is formed on the upper surface of the head portion (182).

11. A battery pack according to claim 6 or any claim dependent on Claim 6, wherein at least one weld hole is formed on the skirt (224) of the upper cover (220) corresponding to electrical connection plates of the printed circuit board (210) to weld the electrical connection plates formed on the printed circuit board (210) to the lead plates of the bare cell (100), and
further comprising a label (360) covering the weld hole of the upper cover (220) and adhered to enclose a side portion of the bare cell (100) including the contact portion of the bare cell (100) and the upper cover (220).

12. A battery pack according to claim 4 or any claim dependent on claim 4, wherein the lead plate of the bare cell (100) is inserted in a socket formed in the printed circuit board (210).

13. A fabricating method of a battery pack, comprising:
preparing a bare cell (100) on which a fixing member (180) is installed;
preparing a circuit accessory (200) in which a fixing member hole (227) corresponding to the fixing member (180) is formed;
inserting the fixing member (180) in the fixing member hole (227), and coupling the circuit accessory (200) and the bare cell (100) by an expanding deformation of said fixing member (180); and
electrically coupling the bare cell (100) and the circuit accessory (200);
**characterised in that** the step of preparing a bare cell (100) comprises providing a cap plate (110), and integrally forming the said fixing member (180) in the form of a protrusion on a surface thereof, wherein the protrusion is formed in an area of the cap plate that has a thickness that is from twice to three times that of an adjoining area of the cap plate.

14. A fabricating method according to Claim 13, wherein the fixing member (180) is formed by a process of rolling the cap plate (110).

15. A fabricating method of a battery pack according to claim 13 or 14, wherein the step of preparing a circuit accessory (200) comprises:
preparing a printed circuit board (210) having electrical connection plates electrically coupled with lead plates (150,160);
preparing an upper cover (220) covering the printed circuit board (210) and including the fixing member hole (227); and
installing an external terminal (216) on one of the printed circuit board (210) or the upper cover (220) for electrical connection with the printed circuit board (210).

16. A fabricating method of a battery pack according to claim 15, wherein the step of preparing the upper cover (220) comprises:
extruding a principal plane (222) having a shape and a size corresponding to those of the cap plate (110) and a skirt (224) bent and extended from edges of the principal plane (222) to the periphery of the bare cell (100);
disposing a fixing member hole (227) on the principal plane (222) corresponding to the fixing member (180); and
forming at least one weld hole (226) on the skirt (224) corresponding to each electrical connection plate of the printed circuit board (210).

17. A fabricating method of a battery pack according to claim 16, wherein at least one fixing member hole (227) comprises an upper hole and a lower hole formed in a direction from the outer surface of the principal plane (222) to the inside of the upper cover (220) on a position perpendicularly conforming to a said fixing member (227), and the diameter of the upper hole is greater than the diameter of the lower hole to form a peripheral flange around a stepped surface (228) between the upper hole and the lower hole, and
wherein the height of the lower hole is shorter than the protruding height of the fixing member (180) to make the fixing member protrude above the stepped surface (228) when the fixing member (180) is inserted in the fixing member hole (227).

18. A fabricating method of a battery pack according to claim 17, wherein the step of inserting the fixing member (180) in the fixing member hole (227), and coupling the circuit accessory (200) and the bare cell (100) comprises: inserting the fixing members (227) to protrude above the stepped surface (228) of the fixing member hole (227) of the upper cover (220); and deforming the fixing member (180) to have a head portion (182) that overlaps the stepped surface (228) and a post portion (184) disposed in the lower hole by an expanding deformation of said fixing member 180).

19. A fabricating method of a battery pack according to claim 18, wherein the step of physically coupling the circuit accessory (200) and the bare cell (100) comprises inserting a washer (340) on the fixing member (180) before carrying out the expanding deformation of said fixing member (180).

20. A fabricating method of a battery pack according to claim 18 or 19, wherein the step of electrically coupling the bare cell (100) and the circuit accessory (200) comprises welding the lead plates of the bare cell (100) to the electrical connection plates of the printed circuit board (210) through the weld hole (226) of the upper cover (220), the step further comprising:
covering the fixing member hole (227) with a stopper (229); and
adhering a label (360) to the side portion of the bare cell (100) including the weld hole (226) of the upper cover (220) and the contact portion (342) of the upper cover (220) and the bare cell (100).

21. A fabricating method of a battery pack according to one of Claims 13 to 20, wherein the step of preparing a circuit accessory (200) comprises: preparing a printed circuit board (210) having a socket coupled with a lead plate; preparing an upper cover (220) covering the printed circuit board (210) and including the fixing member hole (227); and installing an external terminal (216) between the printed circuit board (210) and the upper cover (220).

22. A fabricating method of a battery pack according to claim 21, wherein the step of electrically coupling the bare cell (100) and the circuit accessory (200) comprises
inserting the lead plates of the bare cell (100) in the sockets of the printed circuit board (210).

23. A fabricating method according to one of Claims 13 to 22 wherein the fixing member protrudes from an outer surface of the cap plate (110) by a height that is half to two thirds of a thickness of the cap plate (110).

## Patentansprüche

1. Batteriepack (400), der aufweist:
eine blanke Zelle (100), die eine Kappenplatte (110) am oberen Teil der blanken Zelle (100) umfasst; und
ein Schaltzubehör (200), das mit dem oberen Teil der blanken Zelle (100) verbunden ist, wobei ein Befestigungselement (180) so ausgebildet ist, dass es aus einer Außenfläche der Kappenplatte (110) vorsteht, wobei ein Befestigungselementloch (227) entsprechend dem Befestigungselement (180) im Schaltzubehör (200) ausgebildet ist, und wobei das Befestigungselement (180) in das Befestigungselementloch (227) eingesetzt und damit verbunden wird; **dadurch gekennzeichnet, dass** die Kappenplatte (110) eine Dicke aufweist, die das 2-fache bis 3-fache der der übrigen Fläche in einer Fläche beträgt, die an die Fläche angrenzt, auf der das Befestigungselement (180) ausgebildet ist, und wobei das Befestigungselement zusammenhängend auf der Kappenplatte ausgebildet ist.

2. Batteriepack nach Anspruch 1, wobei der Batteriepack außerdem ein Verschlussstück (229) aufweist, das aus einem Material besteht, das unter Gummi, Leim und Silikon ausgewählt wird, das installiert wird, um das Befestigungselementloch (227) abzudichten.

3. Batteriepack nach Anspruch 1 oder 2, bei dem das Befestigungselement (180) eine Innenfläche des Schaltzubehörs (200) überdeckt; und
wobei ein Abschnitt des Befestigungselementes (180), der mit der Innenfläche des Befestigungselementloches (227) verbunden wird, im Allgemeinen "T"-förmig ist.

4. Batteriepack nach einem der vorhergehenden Ansprüche, bei dem das Schaltzubehör (200) auf einem oberen Teil der Kappenplatte (110) angeordnet und elektrisch mit der blanken Zelle (100) mittels einer Leitungsplatte (150, 160) verbunden ist, die auf der Kappenplatte (110) installiert ist; und
wobei das Schaltzubehör (200) aufweist:
eine Leiterplatte (210), die mittels der Leitungsplatte (150, 160) mit der blanken Zelle (100) elektrisch verbunden ist;
eine obere Abdeckung (220), die die Leiterplatte (210) abdeckt, einschließlich des Befestigungselementloches (227), um das Schaltzubehör (200) mit der blanken Zelle (100) bei einer Verformung des Befestigungselementes (180) zu verbinden; und
eine externe Anschlussklemme (216), die zwischen der Leiterplatte (210) und der Abdeckung installiert ist und die Leiterplatte (210) und eine externe elektronische Vorrichtung elektrisch verbindet.

5. Batteriepack nach Anspruch 4, bei dem die externe Anschlussklemme (216) ein elektrischer Verbinder ist.

6. Batteriepack nach Anspruch 4 oder 5, bei dem die obere Abdeckung (220) eine Hauptebene (222) mit einer Form und einer Abmessung entsprechend der Kappenplatte (110) und eine Einfassung (224) aufweist, die von den Rändern der Hauptebene (222) zum Umfang der blanken Zelle (100) gebogen ist und sich von dort aus erstreckt,
wobei das Befestigungselementloch (227) ein oberes Loch und ein unteres Loch aufweist, die in einer Richtung von der Außenfläche der Hauptebene zur Innenseite der oberen Abdeckung in einer Position ausgebildet sind, die sich senkrecht an das Befestigungselement anpasst, und wobei der Durchmesser (227a) des oberen Loches größer ist als der Durchmesser (227b) des unteren Loches, um einen peripheren Flansch um eine abgestufte Fläche (228) zwischen dem oberen Loch und dem unteren Loch zu bilden, und
wobei das Befestigungselement (180) einen Kopfabschnitt (182), der den peripheren Flansch überdeckt, und einen Stiftabschnitt (184) umfasst, der im unteren Loch angeordnet wird.

7. Batteriepack nach Anspruch 6, der außerdem eine Unterlegscheibe (340) aufweist, die um den Stiftabschnitt (184) und zwischen der abgestuften Fläche (228) und dem Kopfabschnitt (182) des Befestigungselementes (180) installiert wird, und
wobei der Außendurchmesser der Unterlegscheibe (340) kleiner als der oder gleich dem Durchmesser des oberen Loches des Befestigungselementloches (227) ist und der Innendurchmesser der Unterlegscheibe (340) größer als der oder gleich dem Durchmesser des unteren Loches ist.

8. Batteriepack nach Anspruch 7, bei dem die Unterlegscheibe (340) aus einem nichtrostenden Stahl besteht.

9. Batteriepack nach einem der Ansprüche 6 bis 8, bei dem der Durchmesser des Kopfabschnittes (182) gr4ößer ist als der Durchmesser des unteren Loches und kleiner als der oder gleich dem Durchmesser des oberen Loches ist.

10. Batteriepack nach einem der Ansprüche 6 bis 9, bei dem eine konkave Aussparung mit einem Querschnitt von polygonaler Form auf der oberen Fläche des Kopfabschnittes (182) ausgebildet ist.

11. Batteriepack nach Anspruch 6 oder einem Anspruch, der vom Anspruch 6 abhängig ist, bei dem mindestens ein Schweißloch in der Einfassung (224) der oberen Abdeckung (220) entsprechend den elektrischen Anschlussplatten der Leiterplatte (210) ausgebildet ist, um die elektrischen Anschlussplatten, die auf der Leiterplatte (210) ausgebildet sind, an die Leitungsplatten der blanken Zelle (100) zu schweißen; und
der außerdem ein Etikett (360) aufweist, das das Schweißloch der oberen Abdeckung (220) bedeckt und haftet, um einen Seitenabschnitt der blanken Zelle (100) einzuschließen, einschließlich des Kontaktabschnittes der blanken Zelle (100) und der oberen Abdeckung (220).

12. Batteriepack nach Anspruch 4 oder einem Anspruch, der vom Anspruch 4 abhängig ist, bei dem die Leitungsplatte der blanken Zelle (100) in eine Buchse eingesetzt wird, die in der Leiterplatte (210) ausgebildet ist.

13. Herstellungsverfahren für einen Batteriepack, das die folgenden Schritte aufweist:
Herstellen einer blanken Zelle (100), auf der ein Befestigungselement (180) installiert wird;
Herstellen eines Schaltzubehörs (200), in dem ein Befestigungselementloch (227) entsprechend dem Befestigungselement (180) ausgebildet ist;
Einsetzen des Befestigungselementes (180) in das Befestigungselementloch (227) und Verbinden des Schaltzubehörs (200) und der blanken Zelle (100) mittels einer Expansionsverformung des Befestigungselementes (180); und
elektrisches Verbinden der blanken Zelle (100) und des Schaltzubehörs (200);
**dadurch gekennzeichnet, dass** der Schritt des Herstellens einer blanken Zelle (100) das Bereitstellen einer Kappenplatte (110) und das zusammenhängende Ausbilden des Befestigungselementes (180) in der Form eines Vorsprunges auf einer Fläche davon aufweist, wobei der Vorsprung in einer Fläche der Kappenplatte ausgebildet wird, die eine Dicke aufweist, die das 2-fache bis 3-fache der einer angrenzenden Fläche der Kappenplatte beträgt.

14. Herstellungsverfahren nach Anspruch 13, bei dem das Befestigungselement (180) mittels eines Vorganges des Walzens der Kappenplatte (110) gebildet wird.

15. Herstellungsverfahren für einen Batteriepack nach Anspruch 13 oder 14, bei dem der Schritt des Herstellens eines Schaltzubehörs (200) die folgenden Schritte aufweist:
Herstellen einer Leiterplatte (210) mit elektrischen Anschlussplatten, die elektrisch mit den Leitungsplatten (150, 160) verbunden werden;
Herstellen einer oberen Abdeckung (220), die die Leiterplatte (210) bedeckt und das Befestigungselementloch (227) umfasst; und
Installieren einer externen Anschlussklemme (216) auf einem von Leiterplatte (210) oder oberer Abdeckung (220) für eine elektrische Verbindung mit der Leiterplatte (210).

16. Herstellungsverfahren für einen Batteriepack nach Anspruch 15, bei dem der Schritt des Herstellens der oberen Abdeckung (220) die folgenden Schritte aufweist:
Extrudieren einer Hauptebene (222) mit einer Form und einer Abmessung entsprechend jener der Kappenplatte (110) und eine Einfassung (224), die von den Rändern der Hauptebene (222) zum Umfang der blanken Zelle (100) gebogen ist und sich von dort aus erstreckt;
Anordnen eines Befestigungselementloches (227) in der Hauptebene (222) entsprechend dem Befestigungselement (180); und
Ausbilden von mindestens einem Schweißloch (226) in der Einfassung (224) entsprechend einer jeden elektrischen Anschlussplatte der Leiterplatte (210).

17. Herstellungsverfahren für einen Batteriepack nach Anspruch 16, bei dem mindestens ein Befestigungselementloch (227) ein oberes Loch und ein unteres Loch aufweist, die in einer Richtung von der Außenfläche der Hauptebene (222) zur Innenseite der oberen Abdeckung (220) in einer Position ausgebildet sind, die sich senkrecht an ein Befestigungselement (180) anpasst, und wobei der Durchmesser des oberen Loches größer ist als der Durchmesser des unteren Loches, um einen peripheren Flansch um eine abgestufte Fläche (228) zwischen dem oberen Loch und dem unteren Loch zu bilden; und
wobei die Höhe des unteren Loches kürzer ist als die vorstehende Höhe des Befestigungselementes (180), um zu veranlassen, dass das Befestigungselement über die abgestufte Fläche (228) vorsteht, wenn das Befestigungselement (180) in das Befestigungselementloch (227) eingesetzt wird.

18. Herstellungsverfahren für einen Batteriepack nach Anspruch 17, bei dem der Schritt des Einsetzens des Befestigungselementes (180) in das Befestigungselementloch (227) und des Verbindens des Schaltzubehörs (200) und der blanken Zelle (100) die folgenden Schritte aufweist: Einsetzen der Befestigungselemente (180) so, dass sie über die abgestufte Fläche (228) des Befestigungselementloches (227) der oberen Abdeckung (220) vorstehen; und Verformen des Befestigungselementes (180), damit es einen Kopfabschnitt (182), der die abgestufte Fläche (228) überdeckt, und einen Stiftabschnitt (184) aufweist, der im unteren Loch angeordnet ist, mittels einer Expansionsverformung des Befestigungselementes (180).

19. Herstellungsverfahren für einen Batteriepack nach Anspruch 18, bei dem der Schritt des körperlichen Verbindens des Schaltzubehörs (200) und der blanken Zelle (100) den Schritt des Einsetzens einer Unterlegscheibe (340) auf das Befestigungselement (180) vor dem Ausführen der Expansionsverformung des Befestigungselementes (180) aufweist.

20. Herstellungsverfahren für einen Batteriepack nach Anspruch 18 oder 19, bei dem der Schritt des elektrischen Verbindens der blanken Zelle (100) und des Schaltzubehörs (200) den Schritt des Schweißens der Leitungsplatten der blanken Zelle (100) auf die elektrischen Anschlussplatten der Leiterplatte (210) durch das Schweißloch (226) der oberen Abdeckung (220) aufweist, wobei der Schritt außerdem die folgenden Schritte aufweist:
Abdecken des Befestigungselementloches (227) mit einem Verschlussstück (229); und
Anhaften eines Etiketts (360) am Seitenabschnitt der blanken Zelle (100), einschließlich des Schweißloches (226) der oberen Abdeckung (220) und des Kontaktabschnittes (342) der oberen Abdeckung (220) und der blanken Zelle (100).

21. Herstellungsverfahren für einen Batteriepack nach einem der Ansprüche 13 bis 20, bei dem der Schritt des Herstellens eines Schaltzubehörs (200) die folgenden Schritte aufweist: Herstellen einer Leiterplatte (210) mit einer Buchse, die mit einer Leitungsplatte verbunden ist; Herstellen einer oberen Abdeckung (220), die die Leiterplatte (210) bedeckt und das Befestigungselementloch (227) einschließt; und Installieren einer externen Anschlussklemme (216) zwischen der Leiterplatte (210) und der oberen Abdeckung (220).

22. Herstellungsverfahren für einen Batteriepack nach Anspruch 21, bei dem der Schritt des elektrischen Verbindens der blanken Zelle (100) und des Schaltzubehörs (200) den folgenden Schritt aufweist:
Einsetzen der Leitungsplatten der blanken Zelle (100) in die Buchsen der Leiterplatte (210).

23. Herstellungsverfahren für einen Batteriepack nach einem der Ansprüche 13 bis 22, bei dem das Befestigungselement aus einer Außenfläche der Kappenplatte (110) um eine Höhe vorsteht, die die Hälfte bis zwei Drittel einer Dicke der Kappenplatte (110) beträgt.

## Revendications

1. Bloc-batterie (400), comprenant :
une cellule nue (100), englobant une plaque de capuchon (110) sur la partie supérieure de la cellule nue (100) ; et
un accessoire de circuit (200), accouplé à la partie supérieure de la cellule nue (100), un élément de fixation (180) étant configuré de sorte à déborder d'une surface externe de la plaque de capuchon (110), un trou de l'élément de fixation (227) correspondant à l'élément de fixation (180) étant formé dans l'accessoire de circuit (200), et l'élément de fixation (180) étant inséré dans le trou de l'élément de fixation (227) et accouplé à celui-ci ; **caractérise en ce que** la plaque de capuchon (110) a une épaisseur supérieure de deux à trois fois à celle de la partie restante de la surface dans une région adjacente à la région sur laquelle l'élément de fixation (180) est formé, l'élément de fixation étant formé d'une seule pièce sur la plaque de capuchon.

2. Bloc-batterie selon la revendication 1, ledit bloc de batterie comprenant en outre un bouchon (229) composé d'un matériau sélectionné parmi le caoutchouc, la colle et la silicone, et installé de sorte à sceller le trou de l'élément de fixation (227).

3. Bloc-batterie selon les revendications 1 ou 2, dans lequel l'élément de fixation (180) chevauche une surface interne de l'accessoire de circuit (200) ; et
dans lequel une section de l'élément de fixation (180) accouplée à la surface interne du trou de l'élément de fixation (227) a en général une forme en « T ».

4. Bloc-batterie selon l'une quelconque des revendications précédentes, dans lequel l'accessoire de circuit (200) est agencé sur une partie supérieure de la plaque de capuchon (110) et est accouplé électriquement à la cellule nue (100) par l'intermédiaire d'une plaque conductrice (150, 160), installée sur la plaque de capuchon (110) ; et
dans lequel l'accessoire de circuit (200) comprend :
une carte de circuit imprimé (210), accouplée électriquement à la cellule nue (100) par la plaque conductrice (150, 160) ;
un couvercle supérieur (220), recouvrant la carte de circuit imprimé (210), englobant le trou de l'élément de fixation (227) pour accoupler l'accessoire de circuit (200) à la cellule nue (100), avec une déformation de l'élément de fixation (180) ; et
une borne externe (216), installée entre la carte de circuit imprimé (210) et le couvercle, et accouplant électriquement la carte de circuit imprimé (210) et un dispositif électronique.

5. Bloc-batterie selon la revendication 4, dans lequel la borne externe (216) est un connecteur électrique.

6. Bloc-batterie selon les revendications 4 ou 5, dans lequel le couvercle supérieur (220) comprend un plan principal (222), ayant une forme et une taille correspondant à celles de la plaque de capuchon (110), et une jupe (224), fléchie et étendue des bords du plan principal vers la périphérie de la cellule nue (100) ;
dans lequel le trou de l'élément de fixation (227) englobe un trou supérieur et un trou inférieur formés dans une direction allant de la surface externe du plan principal vers l'intérieur du couvercle supérieur, au niveau d'une position adaptée perpendiculairement à l'élément de fixation, le diamètre (227a) du trou supérieur étant supérieur au diamètre (227b) du trou inférieur pour former une bride périphérique autour d'une surface étagée (228) entre le trou supérieur et le trou inférieur ; et
dans lequel l'élément de fixation (180) englobe une partie de tête (192) chevauchant la bride périphérique et une partie de montant (184) agencée dans le trou inférieur.

7. Bloc-batterie selon la revendication 6, comprenant en outre une rondelle (340), installée autour de la partie de montant (184) et entre la surface étagée (228) et la partie de tête (182) de l'élément de fixation (180) ; et
dans lequel le diamètre extérieur de la rondelle (340) est inférieur ou égal au diamètre du trou supérieur du trou de l'élément de fixation (227), le diamètre intérieur de la rondelle (340) étant supérieur ou égal au diamètre du trou inférieur.

8. Bloc-batterie selon la revendication 7, dans lequel la rondelle (340) est fabriquée à partir d'un acier inoxydable.

9. Bloc-batterie selon l'une quelconque des revendications 6 à 8, dans lequel le diamètre de la partie de tête (182) est supérieur au diamètre du trou inférieur et inférieur ou égal au diamètre du trou supérieur.

10. Bloc-batterie selon l'une quelconque des revendications 6 à 9, dans lequel un évidement concave, ayant une section transversale de forme polygonale, est formé sur la surface supérieure de la partie de tête (182).

11. Bloc-batterie selon la revendication 6 ou selon l'une quelconque des revendications dépendant de la revendication 6, dans lequel au moins un trou de soudure est formé sur la jupe (224) du couvercle supérieur (220), correspondant à des plaques de connexion électrique de la carte de circuit imprimé (210), pour souder les plaques de connexion électrique formées sur la carte de circuit imprimé (210) sur les plaques conductrice de la cellule nue (100) ; et
comprenant en outre une étiquette (360), recouvrant le trou de soudure du couvercle supérieur (220) et étant adhérée pour renfermer une partie latérale de la cellule nue (100) englobant la partie de contact de la cellule nue (100) et le couvercle supérieur (220).

12. Bloc-batterie selon la revendication 4 ou selon l'une quelconque des revendications dépendant de la revendication 4, dans lequel la plaque conductrice de la cellule nue (100) est insérée dans une douille formée dans la carte de circuit imprimé (210).

13. Procédé de fabrication d'un bloc-batterie, comprenant les étapes ci-dessous :
préparation d'une cellule nue (100), sur laquelle est installé un élément de fixation (180) ;
préparation d'un accessoire de circuit (200), dans lequel est formé un trou de l'élément de fixation (227) correspondant à l'élément de fixation (180) ;
insertion de l'élément de fixation (180) dans le trou de l'élément de fixation (227), et accouplement de l'accessoire de circuit (200) et de la cellule nue (100) par une déformation par expansion dudit élément de fixation (180) ; et
accouplement électrique de la cellule nue (100) et de l'accessoire de circuit (200) ;
**caractérisé en ce que** l'étape de préparation de la cellule nue (100) comprend la fourniture d'une plaque de capuchon (110) et la formation d'une seule pièce dudit élément de fixation (180) sous forme d'une saillie sur une surface de celle-ci, la saillie étant formée dans une région de la plaque de capuchon ayant une épaisseur représentant deux à trois fois celle d'une région adjacente de la plaque de capuchon.

14. Procédé de fabrication selon la revendication 13, dans lequel l'élément de fixation (180) est formé par un processus de laminage de la plaque de capuchon (110).

15. Procédé de fabrication d'un bloc-batterie selon les revendications 13 ou 14, dans lequel l'étape de préparation d'un accessoire de circuit (200) comprend les étapes ci-dessous :
préparation d'une carte de circuit imprimé (210), comportant des plaques de connexion électrique accouplées électriquement à des plaques conductrices (150, 160) ;
préparation d'un couvercle supérieur (220) recouvrant la carte de circuit imprimé (210) et englobant le trou de l'élément de fixation (227) ; et
installation d'une borne externe (216) sur un élément, la carte de circuit imprimé (210) ou le couvercle supérieur (220), en vue d'une connexion électrique à la carte de circuit imprimé (210).

16. Procédé de fabrication d'un bloc-batterie selon la revendication 15, dans lequel l'étape de préparation du couvercle supérieur (220) comprend les étapes ci-dessous :
extrusion d'un plan principal (222), ayant une forme et une taille correspondant à celles de la plaque de capuchon (110), et d'une jupe (224) fléchie et étendue des bords du plan principal (222) vers la périphérie de la cellule nue (100) ;
agencement d'un trou de l'élément de fixation (227) sur le plan principal (222), correspondant à l'élément de fixation (180) ; et
formation d'au moins un trou de soudure (226) sur la jupe (224), correspondant à chaque plaque de connexion électrique de la carte de circuit imprimé (210).

17. Procédé de fabrication d'un bloc-batterie selon la revendication 16, dans lequel au moins un trou de l'élément de fixation (227) comprend un trou supérieur et un trou inférieur formés dans une direction allant de la surface externe du plan principal (222) vers l'intérieur du couvercle supérieur (220), dans une position adaptée perpendiculairement à un dit élément de fixation (180), le diamètre du trou supérieur étant supérieur au diamètre du trou inférieur, pour former une bride périphérique autour d'une surface étagée (228) entre le trou supérieur et le trou inférieur ; et
dans lequel la hauteur du trou inférieur est inférieure à la hauteur de débordement de l'élément de fixation (180), pour faire déborder l'élément de fixation au-dessus de la surface étagée (228) lorsque l'élément de fixation (180) est inséré dans le trou de l'élément de fixation (227).

18. Procédé de fabrication d'un bloc-batterie selon la revendication 17, dans lequel l'étape d'insertion de l'élément de fixation (180) dans le trou de l'élément de fixation (227) et l'étape d'accouplement de l'accessoire de circuit (200) et de la cellule nue (100) comprennent les étapes ci-dessous : insertion des éléments de fixation (180) de sorte qu'ils débordent au-dessus de la surface étagée (228) du trou de l'élément de fixation (227) du couvercle supérieur (220) ; et déformation de l'élément de fixation (180) pour former une partie de tête (182) chevauchant la surface étagée (228), et une partie de montant (184) agencée dans le trou inférieur, par une déformation par expansion dudit élément de fixation (180).

19. Procédé de fabrication d'un bloc-batterie selon la revendication 18, dans lequel l'étape d'accouplement physique de l'accessoire de circuit (200) et de la cellule nue (100) comprend l'insertion d'une rondelle (340) sur l'élément de fixation (180) avant l'exécution de la déformation par expansion dudit élément de fixation (180).

20. Procédé de fabrication d'un bloc-batterie selon les revendications 18 ou 19, dans lequel l'étape d'accouplement électrique de la cellule nue (100) et de l'accessoire de circuit (200) comprend l'étape de soudage des plaques conductrice de la cellule nue (100) sur les plaques de connexion électrique de la carte de circuit imprimé (210) à travers le trou de soudure (226) du couvercle supérieur (220), l'étape comprenant en outre les étapes ci-dessous :
recouvrement du trou de l'élément de fixation (227) par un bouchon (229) ; et
adhésion d'une étiquette (360) sur la partie latérale de la cellule nue (100), englobant le trou de soudure (226) du couvercle supérieur (220) et la partie de contact (342) du couvercle supérieur (220) et de la cellule nue (100).

21. Procédé de fabrication d'un bloc-batterie selon l'une des revendications 13 à 20, dans lequel l'étape de préparation d'un accessoire de circuit (200) comprend les étapes ci-dessous : préparation d'une carte de circuit imprimé (210) comportant une douille accouplée à une plaque conductrice ; préparation d'un couvercle supérieur (220) recouvrant la carte de circuit imprimé (210) et englobant le trou de l'élément de fixation (227) ; et installation d'une borne externe (216) entre la carte de circuit imprimé (210) et le couvercle supérieur (220).

22. Procédé de fabrication d'un bloc-batterie selon la revendication 21, dans lequel l'étape d'accouplement électrique de la cellule nue (100) et de l'accessoire de circuit (200) comprend l'étape ci-dessous :
insertion des plaques conductrices de la cellule nue (100) dans les douilles de la carte de circuit imprimé (210).

23. Procédé de fabrication selon l'une des revendications 13 à 22, dans lequel l'élément de fixation déborde d'une surface externe de la plaque de capuchon (110) d'une hauteur représentant la moitié à deux tiers d'une épaisseur de la plaque de capuchon (110).
